# EUROPEAN PATENT APPLICATION

(11) **EP 2 604 634 A1**
(43) Date of publication of application: **19.06.2013**
(21) Application number: 11815997.9
(22) Date of filing: 12.08.2011
(51) Int. Cl.: C08F 4/651, C08F 110/06

(54) **CATALYST COMPONENT FOR OLEFIN POLYMERIZATION REACTION AND CATALYST THEREOF**

(30) Priority: 12.08.2010 CN 201010251555
(71) Applicant: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: GAO, Mingzhi, Beijing 100013 (CN); LI, Changxiu, Beijing 100013 (CN); LIU, Haitao, Beijing 100013 (CN); LI, Xianzhong, Beijing 100013 (CN); ZHANG, Xiaofan, Beijing 100013 (CN); CAI, Xiaoxia, Beijing 100013 (CN); CHEN, Jianhua, Beijing 100013 (CN); MA, Jing, Beijing 100013 (CN); MA, Jixing, Beijing100013 (CN)
(74) Representative: HOFFMANN EITLE
(86) International application number: PCT/CN2011/001346
(87) International publication number: WO 2012/019438

(57) **Abstract**

A catalyst component for olefin polymerization which contains magnesium, titanium, halogen and electron donors is provided in the present invention. The electron donors are selected from at least one succinate compounds of following general formula (I), and the content of said succinate compounds with the structure as shown in Formula (II) in said succinate compounds (I) is less than 100%, but not less than 51.0wt%. Compared with the mesomer whose content with the structure as shown in Formula (II) is 100%, the catalyst component provided by the present invention not only greatly decreases the manufacturing cost, but also improves certain properties of the catalyst, for example the molecular weight distribution of polymer obtained by catalytic reaction using said catalyst is wider, which is beneficial for improving processing properties of polymers. The corresponding catalyst is also provided.

## Description

### Technical Field

The present invention relates to a solid catalyst component comprising a succinate compound with a special structure and the preparation thereof. The present invention also relates to a catalyst comprising said solid catalyst component and its use in olefin polymerization, especially in propylene polymerization.

### Technical Background

It is well known that, the solid titanium catalyst component comprising magnesium, titanium, halogen and electron donor as basic ingredients can be used in the polymerization of olefins, especially alpha olefins having three or more carbon atoms for obtaining polymers with a higher stereoregularity in a higher yield. The electron donor compound is one of the essential ingredients of the catalyst component. With the development of the internal electron donor compounds, new catalysts for polyolefins are continuously proposed. At present, a large number of electron donor compounds have been disclosed, for instance, polycarboxylic acid, monocarboxylic ester or polycarboxylic ester, anhydride, ketone, monoether or polyether, alcohol, amine, etc., and the derivatives thereof.

Chinese patents CN1313869A, CN1398270A and CN1681853A have disclosed a succinate compound, which can be used as an electron donor in the catalyst for olefin polymerization. In the succinate compound disclosed, when the four groups connected to one carbon atom are different from one another, there are two spatial connection modes for the four groups. The two connection modes are mirror images of each other, like the left hand and right hand, which cannot be completely superimposed onto each other. This kind of compound is known as a "chiral compound". In above patents, the structure of or ratio between these optical isomers in a chiral succinate compound is not defined. Through trial and error, the inventor surprisingly finds that, if the succinate compounds as shown in Formula (I) with several conformational isomers are used as internal electron donors to prepare the catalyst, the catalyst would have a satisfactory activity and stereospecificity only when a certain amount or more of isomers with the Fischer projection formula as shown in Formula (II) is contained thereof.

As to a pure stereoisomer, such as a mesomer or a racemate, the cost of synthesis is high. As to the synthesis of a compound, especially the compound with high purity, its synthesis cost will be significantly increased for improving the purity, even by 1%. As to the synthesis of the compounds having chiral carbon atoms, especially more than two chiral carbon atoms, unless a special method is used, the synthesized compounds are generally a mixture of several conformational isomers. Due to different synthesis processes or conditions, the contents of the isomers obtained are different. Moreover, the reaction binding abilities of different conformational isomers with magnesium compounds and/or titanium compounds are different. Furthermore, even when one compound consisting of the same isomers is used as the electron donor to prepare a catalyst, the amount of each isomer in said catalyst component obtained will be very different from each other due to different synthesis conditions, and the properties of the final catalyst will be affected. The inventor surprisingly finds that, as to the succinate compounds as shown in Formula (I) with several isomers, when the catalyst contains a certain amount of isomers with the Fischer projection formula as shown in Formula (II), its performance would be comparable to that of the catalyst in which all succinate compounds are with the Fischer projection formula as shown in Formula (II). Therefore, when the content of isomers with the Fischer projection formula (II) in the catalyst component used in the present invention is within a certain range, the manufacturing cost is decreased, and the performance of the catalyst would be improved, such as the molecular weight distribution (MWD) of the polymer obtained from the catalytic reaction will be wider, which is beneficial for improving the processing performance of polymers.

### Summary of the invention

The invention aims to provide a catalyst component for olefin polymerization, which comprises magnesium, titanium, halogen and electron donor, wherein the electron donor is selected from at least one of the succinate compounds as shown in Formula (I), and in said succinate compounds as shown in Formula (I), the content of the succinate compounds with the Fischer projection formula as shown in Formula (II) is greater than or equal to 51.0wt% and less than 100wt%: 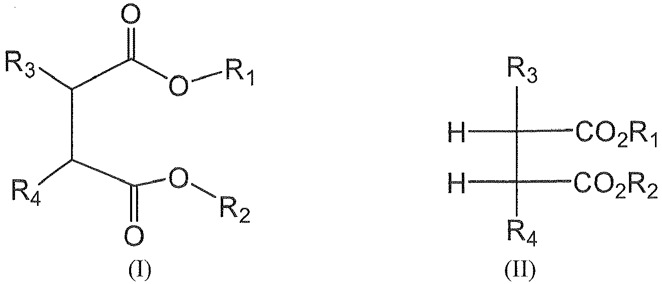 in both Formula (I) and (II), R₁ and R₂, which may be identical to or different from each other, can be (C₁~C₂₀) straight chain alkyl group, (C₃~C₂₀) branched chain alkyl or cycloalkyl group, (C₆~C₂₀) aryl or (C₇∼C₂₀) alkaryl or aralkyl group;

R₃ and R₄, which may be identical to or different from each other, can be halogen atom, (C₁∼C₁₀) straight chain alkyl, (C₃~C₁₀) branched chain alkyl, (C₃~C₁₀) cycloalkyl, (C₆∼C₁₀) aryl or (C₇∼C₁₀) alkaryl or aralkyl group, and R₃ and R₄ can be optionally bonded together to form a ring, and R₃ and R₄ can optionally comprises heteroatoms.

Preferably, in said succinate compounds as shown in Formula (I), R₁ and R₂ are selected from methyl, ethyl, propyl, isopropyl, butyl, isobutyl, tertbutyl, pentyl, cyclopentyl, cyclohexyl, phenyl, halogenated phenyl, alkylphenyl, halogenated alkylphenyl, indene, benzyl or phenylethyl group. And R₃ and R₄ are selected from methyl, ethyl, propyl, isopropyl, butyl, isobutyl, tertbutyl, pentyl, isopentyl, cyclopentyl, cyclohexyl, phenyl, substituted phenyl, alkyl phenyl, halogenated alkyl phenyl, indene, benzyl or phenylethyl, and optionally comprise heteroatoms.

More preferably, in said succinate compounds, R₁ is the same as R₂ and R₃ is the same as R₄.

As to the synthesis of the compounds having a chiral carbon atom, especially those having more than two chiral carbon atoms, unless a special method is used, the synthesized compound is generally a mixture of several conformational isomers, comprising the levo isomer, the dextro isomer, the symmetric compound and the mesomer, wherein the same amount of the levo isomers and the dextro isomers can be mixed to form the racemate. Due to different synthesis processes or conditions, the contents of the conformational isomers obtained are different. The reaction binding abilities of different conformational isomers with magnesium compounds and/or titanium compounds are different. Thus in the preparation of catalyst, even when one single kind of succinate compound is used and the amount thereof is the same, the properties of the final catalyst will be very different from each other due to different contents of each conformational isomer.

In the present invention, the Fischer projection formula and its naming are determined according to the rules set forth on Pages 40-42 of System Organic Chemistry co-authored by YANG Fengke, LI Ming and LI Fengqi. The principles are as follows: a cross represents the three-dimension skeletal structure of a molecule, in which the center of the cross is the chiral carbon atom, the vertical bonds extend toward the back of the sheet plane, and the transverse bonds extend toward the front of the sheet plane; the Fischer projection formula cannot rotate freely on the sheet plane, and the configuration will be changed if the Fischer projection formula rotates 90°, and unchanged if it rotates 180°; any two groups of the chiral carbon cannot be exchanged with each other freely, and the configuration will be changed if they are exchanged once, and unchanged if exchanged twice. The naming of R and S systems is determined according to the rules set forth on Pages 42-43 of System Organic Chemistry coauthored by YANG Fengke, LI Ming and LI Fengqi. The principles are as follows: the smallest group in the Fischer projection formula is located at the position of vertical bond, the other groups are arranged in a descending order of the size of atoms or atomic groups. If the above groups is arranged in a clockwise direction in terms of size, a R configuration will be formed; otherwise, a counterclockwise direction will result in an S configuration; if the smallest group in the Fischer projection formula is located at a position of the transverse bond, then a clockwise arrangement leads to a S configuration, and a counterclockwise arrangement leads to an R configuration.

The binding abilities of different conformational isomers of one single compound with a magnesium compound and/or a titanium compound are different, and the distances among the atoms in the combinations are also different. It is surprisingly to find that when the succinate compound as shown in Formula (I) is used as an electron donor to prepare a catalyst component for olefin polymerization, the binding ability of the succinate compound with the Fischer projection formula as shown in Formula (II) with the magnesium compound and/or the titanium compound and the distance among the atoms in the combination are the most suitable, and the comprehensive properties of the obtained catalyst are also the best. Therefore, higher content of the succinate compound with the Fischer projection formula as shown in Formula (II) (the content is less than 100 %) will result in a catalyst with better comprehensive properties and higher activity and stereospecificity.

In preparing said catalyst component for olefin polymerization with the succinate compound as shown in Formula (I) as electron donor, only when the content of the succinate compound with the Fischer projection formula as shown in Formula (II) is not less than 51.0wt% can the catalyst have a comparatively high activity and stereotactic ability. In the present invention, the content of the succinate compound with the Fischer projection formula as shown in Formula (II) is preferably 51.0 to 98.0 wt%, further preferably 67.0 to 98.0 wt%, and even further preferably 76.0 to 97.0 wt%.

The appropriate compounds with the Fischer projection formula as shown in Formula (II) are selected from, but not limited to, the following compounds (wherein meso refers to mesomer, i.e. R₁=R₂ and R₃=R₄ in the Fisher projection formula (II)):
meso-2,3-dimethyl succinic acid methyl ester,
meso-2,3- dimethyl succinic acid ethyl ester,
meso-2,3- dimethyl succinic acid propyl ester,
meso-2,3- dimethyl succinic acid isopropyl ester,
meso-2,3- dimethyl succinic acid butyl ester,
meso-2,3-dimethyl succinic acid isobutyl ester,
meso-2,3-dimethyl succinic acid tertbutyl ester,
meso-2,3-diethyl succinic acid methyl ester,
meso-2,3-diethyl succinic acid ethyl ester,
meso-2,3-diethyl succinic acid propyl ester,
meso-2,3-diethyl succinic acid isopropyl ester,
meso-2,3-diethyl succinic acid butyl ester,
meso-2,3-diethyl succinic acid isobutyl ester,
meso-2,3-diethyl succinic acid tertbutyl ester,
meso-2,3-dipropyl succinic acid methyl ester,
meso-2,3-dipropyl succinic acid ethyl ester,
meso-2,3-dipropyl succinic acid propyl ester,
meso-2,3-dipropyl succinic acid isopropyl ester,
meso-2,3-dipropyl succinic acid butyl ester,
meso-2,3-dipropyl succinic acid isobutyl ester,
meso-2,3-dipropyl succinic acid tertbutyl ester,
meso-2,3-diisopropyl succinic acid methyl ester,
meso-2,3-diisopropyl succinic acid ethyl ester,
meso-2,3-diisopropyl succinic acid propyl ester,
meso-2,3-diisopropyl succinic acid isopropyl ester,
meso-2,3-diisopropyl succinic acid butyl ester,
meso-2,3-diisopropyl succinic acid isobutyl ester,
meso-2,3-diisopropyl succinic acid tertbutyl ester,
meso-2,3-dibutyl succinic acid methyl ester,
meso-2,3-dibutyl succinic acid ethyl ester,
meso-2,3-dibutyl succinic acid propyl ester,
meso-2,3-dibutyl succinic acid isopropyl ester,
meso-2,3-dibutyl succinic acid butyl ester,
meso-2,3-dibutyl succinic acid isobutyl ester,
meso-2,3-dibutyl succinic acid tertbutyl ester,
meso-2,3-diisobutyl succinic acid methyl ester,
meso-2,3-diisobutyl succinic acid ethyl ester,
meso-2,3-diisobutyl succinic acid propyl ester,
meso-2,3-diisobutyl succinic acid isopropyl ester,
meso-2,3-diisobutyl succinic acid butyl ester,
meso-2,3-diisobutyl succinic acid isobutyl ester,
meso-2,3-diisobutyl succinic acid tertbutyl ester,
meso-2,3-dibenzyl succinic acid methyl ester,
meso-2,3-dibenzyl succinic acid ethyl ester,
meso-2,3-dibenzyl succinic acid propyl ester,
meso-2,3-dibenzyl succinic acid isopropyl ester,
meso-2,3-dibenzyl succinic acid butyl ester,
meso-2,3-dibenzyl succinic acid isobutyl ester,
meso-2,3-dibenzyl succinic acid tertbutyl ester,
meso-2,3-dicyclohexyl succinic acid methyl ester,
meso-2,3-dicyclohexyl succinic acid ethyl ester,
meso-2,3-dicyclohexyl succinic acid propyl ester,
meso-2,3-dicyclohexyl succinic acid isopropyl ester,
meso-2,3-dicyclohexyl succinic acid butyl ester,
meso-2,3-dicyclohexyl succinic acid isobutyl ester,
meso-2,3-dicyclohexyl succinic acid tert-butyl ester,
meso-2,3-dicyclohexyl succinic acid pentyl ester,
meso-2,3-dicyclohexyl succinic acid isopentyl ester,
meso-2,3-dicyclohexyl methyl succinic acid methyl ester,
meso-2,3-dicyclohexyl methyl succinic acid ethyl ester,
meso-2,3-dicyclohexyl methyl succinic acid propyl ester,
meso-2,3-dicyclohexyl methyl succinic acid isopropyl ester,
meso-2,3-dicyclohexyl methyl succinic acid butyl ester,
meso-2,3-dicyclohexyl methyl succinic acid isobutyl ester,
meso-2,3-dicyclohexyl methyl succinic acid tertbutyl ester,
(2R, 3S)-2-methyl-3-benzyl succinic acid methyl ester,
(2R, 3S)-2-methyl-3-benzyl succinic acid ethyl ester,
(2R, 3S)-2-methyl-3-benzyl succinic acid propyl ester,
(2R, 3S)-2-methyl-3-benzyl succinic acid isopropyl ester,
(2R, 3S)-2-methyl-3-benzyl succinic acid butyl ester,
(2R, 3S)-2-methyl-3-benzyl succinic acid isobutyl ester,
(2R, 3S)-2-methyl-3-benzyl succinic acid tertbutyl ester,
(2R, 3S)-2-methyl-3-benzyl succinic acid pentyl ester,
(2R, 3S)-2-methyl-3-benzyl succinic acid isopentyl ester,
(2S, 3R)-2-methyl-3-benzyl succinic acid methyl ester,
(2S, 3R)-2-methyl-3-benzyl succinic acid ethyl ester,
(2S, 3R)-2-methyl-3-benzyl succinic acid propyl ester,
(2S, 3R)-2-methyl-3-benzyl succinic acid isopropyl ester,
(2S, 3R)-2-methyl-3-benzyl succinic acid butyl ester,
(2S, 3R)-2-methyl-3-benzyl succinic acid isobutyl ester,
(2S, 3R)-2-methyl-3-benzyl succinic acid tert-butyl ester,
(2S, 3R)-2-methyl-3-benzyl succinic acid pentyl ester,
(2S, 3R)-2-methyl-3-benzyl succinic acid isopentyl ester,
(2R, 3S)-2-methyl-3-cyclohexyl methyl succinic acid methyl ester,
(2R, 3S)-2-methyl-3-cyclohexyl methyl succinic acid ethyl ester,
(2R, 3S)-2-methyl-3-cyclohexyl methyl succinic acid propyl ester,
(2R, 3S)-2-methyl-3-cyclohexyl methyl succinic acid isopropyl ester,
(2R, 3S)-2-methyl-3-cyclohexyl methyl succinic acid butyl ester,
(2R, 3S)-2-methyl-3-cyclohexyl methyl succinic acid isobutyl ester,
(2R, 3S)-2-methyl-3-cyclohexyl methyl succinic acid tertbutyl ester,
(2R, 3S)-2-methyl-3-cyclohexyl methyl succinic acid pentyl ester,
(2R, 3S)-2-methyl-3-cyclohexyl methyl
(2S, 3R)-2-methyl-3-cyclohexyl methyl succinic acid methyl ester,
(2S, 3R)-2-methyl-3-cyclohexyl methyl succinic acid ethyl ester,
(2S, 3R)-2-methyl-3-cyclohexyl methyl succinic acid propyl ester,
(2S, 3R)-2-methyl-3-cyclohexyl methyl succinic acid isopropyl ester,
(2S, 3R)-2-methyl-3-cyclohexyl methyl succinic acid butyl ester,
(2S, 3R)-2-methyl-3-cyclohexyl methyl succinic acid isobutyl ester,
(2S, 3R)-2-methyl-3-cyclohexyl methyl succinic acid tertbutyl ester,
(2S, 3R)-2-methyl-3-cyclohexyl methyl succinic acid pentyl ester,
(2S, 3R)-2-methyl-3-cyclohexyl methyl succinic acid isopentyl ester.

Said catalyst component used for olefin polymerization according to the present invention may also contain magnesium, titanium, halogen and electron donors "a" and "b", wherein "a" is at least one of succinate compounds as shown in Formula (I), and in said succinate compounds, the content of the succinate compound with the Fischer projection formula as shown in Formula (II) is less than 100%, but not less than 51.0wt%, and "b" is an aromatic esters compound such as benzoates or phthalates, or a diether compound as shown in Formula (III), and the molar ratio of "a" to "b" is from 1:0.01 to 1:100, preferably 1:0.02 to 1:5 : 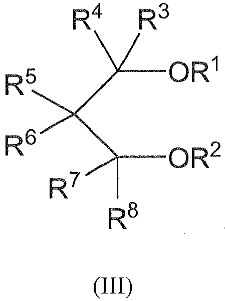 in Formula (III), R¹ and R², which may be identical to or different from each other, can be selected from a straight chain or a branched chain (C₁-C₂₀) alkyl and a (C₃-C₂₀) cycloalkyl group; R³-R⁸, which may be identical to or different from one another, can be selected from a hydrogen atom, a halogen atom, a straight chain or a branched chain (C₁-C₂₀) alkyl, a (C₃-C₂₀) cycloalkyl, a (C₆-C₂₀) aryl and a (C₇-C₂₀) aralkyl group, and the R³-R⁸ groups can be optionally bonded together to form a ring. Because the catalyst component contains a certain amount of succinate compounds with the Fischer projection formula as shown in Formula (II), both the activity of the catalyst and the isotacticity of the polymers have been improved significantly.

According to the present invention, said solid catalyst component used for olefin polymerization is preferably obtained through reaction of magnesium compound, titanium compound and said succinate compound, wherein the titanium compound is as shown in Formula of TiXₙ(OR)₄₋ₙ, in which R is a hydrocarbyl group having 1 to 20 carbon atoms, X is halogen, and n=0-4. For example, it can be titanium tetrachloride, titanium tetrabromide, titanium tetraiodide, tetrabutoxy titanium, tetraethoxy titanium, triethoxy titanium chloride, diethoxy titanium dichloride and ethoxy titanium trichloride.

Said magnesium compound is selected from magnesium dihalide, alkoxy magnesium, alkyl magnesium, hydrate or alcohol adduct of magnesium dihalide, or one of the derivatives formed by replacing a halogen atom of the magnesium dihalide molecular formula with an alkoxy or haloalkoxy group, or their mixture. Preferred magnesium compounds are magnesium dihalide, alcohol adduct of magnesium dihalide, and alkoxy magnesium.

It should be particularly noted that, the magnesium compound is preferably dissolved in a solvent system containing an organic epoxy compound and an organic phosphorus compound, in which the organic epoxy compound comprises at least one of aliphatic olefins, dienes, halogenated aliphatic olefins, oxides of dienes, glycidyl ethers and inner ethers, all of which have 2 to 8 carbon atoms. Some specific compounds are as follows: ethylene oxide, propylene oxide, epoxy butane, butadiene oxide, butadiene dioxide, epichlorohydrin, methyl glycidyl ether, diglycidyl ether, tetrahydrofuran. The organic phosphorus compound comprises hydrocarbyl ester or halogenated hydrocarbyl ester of orthophosphoric acid or phosphorous acid, specifically, such as, trimethyl orthophosphate, triethyl orthophosphate, tributyl orthophosphate, triphenyl orthophosphate, trimethyl phosphite, triethyl phosphite, tributyl phosphite, triphenylmethyl phosphate.

Magnesium compounds can also be dissolved in a solvent system containing organic alcohol compounds, which comprise monohydric alcohol with 2 to 8 carbon atoms.

Different methods can be chosen to prepare the solid catalyst component according to the present invention. Several preparation methods are listed below, which would not restrict the preparation method for the solid catalyst component according to the invention in any way.

Method 1: preparing the catalyst component according to CN1506384. First, a magnesium compound and an organic alcohol compound with a molar ratio of 2 to 5 are mixed with an inert solvent; the temperature is increased to 120 to 150°C, and then phthalic anhydride and an organic silicon compound with a magnesium/anhydride molar ratio of 5 to 10 and a magnesium/silicon molar ratio of 20 to 50 are added; after reacting for 1 to 5h, an alcohol adduct is obtained.

Next, the alcohol adduct which has been cooled to room temperature is added into a solution of a titanium compound which is pre-cooled to a temperature of -15 to -40°C, with a titanium/magnesium molar ratio of 20 to 50. The temperature is increased to 90 to 110°C, and then an ester selected from Formula (I) with a magnesium/ester molar ratio of 2 to 10 is added. After reacting at a temperature of 100 to 130°C for 1 to 3h, solid particulates are filtered and separated.

Then, the solid particulates are added into a solution of the titanium compound with a titanium/magnesium molar ratio of 20 to 50. After reacting under stirring at a temperature of 100 to 130°C for 1.5 to 3h, the solid particulates are filtered and separated.

Finally, an inert solvent at a temperature of 50 to 80°C is used to wash the solid particulates, and then the catalyst component is obtained after drying.

Method 2: preparing the catalyst component according to CN85100997. First, a magnesium compound is dissolved in a solvent system comprising an organic epoxy compound, an organic phosphorus compound and an inert diluent. After a uniform solution is formed, the solution is mixed with a titanium compound, and solids are precipitated at the presence of a coprecipitation agent. Such solids are treated with the succinate compound as shown in Formula (I) so that said succinate compound is loaded on the solids; if necessary, titanium tetrahalide and inert diluent are used to further treat the solids. The coprecipitation agent can be selected from organic acid anhydride, organic acid, ether, and ketone, or their mixtures, and some specific coprecipitation agents are as follows: acetic anhydride, phthalic anhydride, butanedioic anhydride, maleic anhydride, pyromellitic dianhydride, acetic acid, propionic acid, butyric acid, acrylic acid, methacrylic acid, acetone, methyl ethyl ketone, diphenyl ketone, methyl ether, ethyl ether, propyl ether, butyl ether and amyl ether.

The amount of each said component is calculated by each molar of magnesium halide, wherein the organic epoxy compound is from 0.2 to 10 molar, the organic phosphorus compound is from 0.1 to 3 molar, the coprecipitation agent is from 0 to 1.0 molar, the titanium compound is from 0.5 to 150 molar, and the amount of the succinate compound as shown in Formula (I) is from 0.02 to 0.5 molar.

Method 3: preparing the catalyst component according to CN1091748. The melt of a magnesium chloride alcohol adduct is dispersed by high speed stirring in a dispersant system of white oil and silicone oil, and an emulsion is formed. Then the emulsion is unloaded into a coolant to be cooled and set rapidly, and microspheres of the magnesium chloride alcohol adduct are formed. The coolant is an inert hydrocarbon solvent with a low boiling point, such as petroleum ether, pentane, hexane, heptane, and so on. The microspheres of the magnesium chloride alcohol adduct obtained are spherical carriers after being washed and dried. The molar ratio of alcohol to magnesium chloride is from 2 to 3, preferably 2 to 2.5. The diameter of the carriers is from 10 to 300 µm, preferably 30 to 150 µm.

Excess amount of titanium tetrachloride is used to treat the above spherical carriers at a low temperature. The temperature is increased gradually, and an electron donor is added during the treatment. After treatment, the spherical carriers are washed with an inert solvent for several times, and a solid powdered spherical catalyst is obtained after drying. The molar ratio of titanium tetrachloride to magnesium chloride is from 20 to 200, preferably 30 to 60. The onset treatment temperature is from -30 to 0°C, preferably -25 to -20°C. The final treatment temperature is from 80 to 136°C, preferably 100 to 130°C.

The obtained spherical catalyst has the following characteristics: the content of titanium is from 1.5 to 3.0wt%, the content of ester is from 6.0 to 20.0wt%, the content of chloride is from 52 to 60wt%, the content of magnesium is from 10 to 20wt%, the content of inert solvent is from 1 to 6wt%, and the specific surface area of catalyst is greater than 250m²/g.

Method 4: Titanium tetrachloride (TiCl₄) or a solution of titanium tetrachloride (TiCl₄) in arene is used to halogenate the dialkoxymagnesium compound, such as dialkoxy magnesium and diaryloxymagnesium. The treatment with titanium tetrachloride (TiCl₄) or the solution of titanium tetrachloride (TiCl₄) in arene can be repeated for one or more times, and said succinate is added therein during the one or more times of such treatment.

Method 5: preparing the catalyst component according to US4540679. A transition metal compound (preferably a tetravalent titanium compound), an alkoxymagnesium compound and electron donor react with one another in a certain proportion in an inert solvent, wherein the molar ratio of the transition metal element to the magnesium element is at least 0.5:1, and the amount of the electron donor is at most 1.0 mol for each gram of titanium atoms. The inert solvent should be removed conveniently, and dehydrated and deoxidated, and removed of the gas that would poison the catalyst. The reaction is carried out at a temperature of -10 to 170°C, and the reaction time is from several minutes to several hours.

The methods for preparing a catalyst component further include, for example, adding a magnesium compound, an electron donor and so on in a diluent to form an emulsion, then adding a titanium compound for fixation to obtain a spherical solid, and then obtaining a solid catalyst after treatment.

The present invention also aims to provide a catalyst for CH₂=CHR olefin polymerization, wherein R is hydrogen or a C₁-C₆ alkyl or aryl group. Said catalyst comprises the reaction products of the following components:
1) a solid catalyst component comprising magnesium, titanium, halogen and electron donor selected from the succinate compounds as shown in Formula (I) in which the content of the succinate compound with the Fischer projection formula as shown in Formula (II) is at least 51.0wt% and less than 100wt%
2) an alkyl aluminium compound,
3) optionally, an external electron donor component.
wherein the alkyl aluminium compound is the compound with a Formula of AlRₙX₃₋ₙ, in which R is hydrogen or a hydrocarbyl group having 1 to 20 carbon atoms, X is halogen, and n is a value satisfying 1≤n≤3. Specifically, the compound can be selected from triethyl aluminium, tripropyl aluminium, tri(n-butyl) aluminum, tri(isobutyl) aluminium, tri(n-octyl) aluminium, tri(isobutyl) aluminium, diethyl aluminium hydride, di(isobutyl) aluminium hydride, diethyl aluminium chloride, di(isobutyl) aluminium chloride, ethyl aluminum sesquichloride and ethyl aluminium dichloride, and preferably triethyl aluminium and tri(isobutyl) aluminium.

In the application of the olefin polymer requiring a very high stereoregularity, an external electron donor compound (3) should be added, such as an organosilicon compound with a Formula of Rₙsi(OR')₄₋ₙ, in which 0≤n≤3, and R and R', which may be identical to or different from each other, can be selected from alkyl, cycloalkyl, aryl, halogenated alkyl and amine group, and R can be also halogen or hydrogen atom. For example, they can be selected from trimethyl methoxy silane, trimethyl ethoxy silane, dimethyl dimethoxy silane, dimethyl diethoxy silane, diphenyl dimethoxy silane, diphenyl diethoxy silane, phenyl triethoxy silane, phenyl trimethoxy silane, vinyl trimethoxy silane, cyclohexyl methyl dimethoxy silane and methyl t-butyl dimethoxy silane, preferably cyclohexyl methyl dimethoxy silane and diphenyl dimethoxy silane.

The ratio of component (1) to component (2) to component (3), calculated based on the molar ratio of titanium: aluminium: silicon, is in the range of 1:5-1000:0-500, preferably within the range of 1:25-100:25-100.

The above external electron donors can be selected from monobasic or polybasic organic carboxylic esters, such as monobasic or polybasic benzoates, preferably mono benzoates.

The above external donors can be selected from 1, 3-diether compounds as shown in Formula (IV), 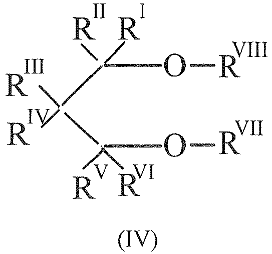 wherein R^{I}, R^{II}, R^{III}, R^{IV}, R^{V} and R^{VI}, which may be identical to or different from each other, can be hydrogen or hydrocarbyl group having 1 to 18 carbons; R^{VII} and R^{VIII}, which may be identical to or different from each other, can be hydrocarbyl group having 1 to 18 carbons, and R^{I}-R^{VIII} groups can be optionally bonded together to form a ring. Preferably, R^{VII} and R^{VIII} are selected from C₁-C₄ alkyl group, R^{III} and R^{IV} are bonded together to form a fused ring, and R^{I}, R^{II}, R^{V} and R^{VI} are all hydrogen. For example, 9, 9 - bis (methoxy methyl) fluorene.

The olefin polymerization of the present invention is carried out according to the well-know polymerization process in liquid-phase or gas-phase, or in the combined liquid-gas phase polymerization. The catalyst of the present invention can be used in any kind of universal polymerization process, which adopts the conventional technology such as the slurry method and the gas fluidized bed, wherein the olefins are selected from ethylene, propylene, 1-butylene, 4-methyl-1-pentene and 1-hexene, especially in the homopolymerization of propylene or the copolymerization of propylene and other olefins.

The catalyst of the present invention can be added directly into the reactor for polymerization, or be prepolymerized before being added into the first reactor. In the present invention, the term "prepolymerization" refers to polymerization with a low conversion rate. According to the present invention, said prepolymerization catalyst comprises the above solid catalyst component and the prepolymer obtained through the prepolymerization of the catalyst and olefin, wherein the prepolymerization multiply is in the range of 0.1 to 1000g of olefin polymer per 1g of solid catalyst component.

The α-olefinthe which is the same as the foregoing olefin, preferably ethylene or propylene, can be used for prepolymerization. Specifically, a mixture of ethylene and one or more α-olefins with a maximum amount of 20mol% are particularly advantageous for prepolymerization. Preferably, the conversion degree of prepolymerized catalyst component is in a range of about 0.2 to 500g of polymer per 1g of solid catalyst component.

The prepolymerization process can be carried out at a temperature of -20 to 80°C, preferably 0 to 55°C, in liquid or gas phase. The prepolymerization step can be carried out on-line as a part of continuous polymerization process, or independently in intermittent operations. In preparing the polymer with an amount of 0.5 to 20g per 1g catalyst component, intermittent prepolymerization of the catalyst according to the present invention and ethylene is particularly preferred. The polymerization pressure is from 0.01 to 10MPa.

The catalyst according to the present invention can be also used to produce polyethylene, and copolymer of ethylene with α-olefins, such as propylene, butylene, pentene, hexene, octene, and 4-methyl-1-pentene.

It should be particularly noted that, catalyst with excellent comprehensive performance can be obtained in the present invention by means of the catalyst component comprising a certain amount of internal electron donor succinate compounds with the Fischer projection formula as shown in Formula (II). A satisfactory yield and a polymer with high isotacticity can be obtained when said catalyst is used for propylene polymerization, which is highlighted in that the prepared polypropylene has a very wide molecular weight distribution. As a result, a single reactor can provide products which have to be produced only by a plurality of reactors in prior art. Moreover, the products are homopolymer with high rigidity and multi-phase copolymer, thus expanding the performances of propylene homopolymer and copolyme.

### Embodiments

The present invention will be explained in detail by the following examples, which are not to restrict the scope of the present invention in any manner.

### Test methods:

1. Measurement of Nuclear Magnetic Resonance: using a Bruke dmx300 nuclear magnetic resonance spectrometer for 1H-NMR (300MHz, the solvent is CDCl₃, TMS is the internal standard, and the measuring temperature is 300K);
2. The Isotactic Index of the polymer is measured by the heptane extraction method (boiling heptane extracted for 6h): 2g of dried polymer sample is extracted with boiling heptane in an extractor for 6 hours, then the residual substance is dried to a constant weight, and the ratio of the weight (g) of the residual polymer to 2 is the Isotactic Index;
3. Measurement of a liquid chromatography: using a Waters-600E high performance liquid chromatography with an AD-R (4.6mm*50mm) column; the mobile phase is methanol-water (60/40) with a flow rate of 0.5 ml/min; the detected wave is 254 nm; and the column temperature is 25°C.
4. Polymer weight distribution Mw/Mn: using a Waters Alliance GPC 2000 gel penetration chromatography (Waters), 1, 2, 4-trichlorobenzene as the solvent, and styrene as the standard sample.

### a) Synthesis of succinate compounds

Succinate compounds can be synthesized as disclosed in "Journal of Polymer Science: Polymer Chemistry Edition. 1980 (18), 1739-1758 (A. Yamada, S. Grossman and O. Vogl)".

The general procedures are as follows.

### (1) The synthesis of succinate compounds as shown in Formula (I)

1.2L of fresh distilled THF are added into a 3L flask equipped with a stirrer, a reflux condenser and a dropping apparatus, and 134g of anhydrous CuCl₂ (0.99mmol) are added under vigorous stirring. After the brown powders of CuCl₂ turn into orange-red crystal, 64g of zinc powders (0.98mol) after activation treatment and a very small amount of HgBr₂ are added, then 100g of ethyl 2-bromoisovalerate (0.48mol) are dropwise added. A reflux is carried out for 2h under heating after the addition is complete. Then, the solution is placed over night at the room temperature so as to precipitate.

The supernatant is poured out, and then after THF is removed under reduced pressure on the rotary evaporator, the remaining liquid is poured into a separatory funnel. The residue solid is washed with ethyl ether for 3 times. Then, the washing liquids are mixed and also poured into the separatory funnel. The organic layer in the separatory funnel is washed successively with dilute hydrochloric acid, sodium bicarbonate and ammonium chloride solution, and finally with saturated salt solution. The organic layer is dried with anhydrous magnesium sulfate after being separated. After the dried liquid is rotary evaporated to remove the solvent, it is distilled under reduced pressure, and the fraction colorless liquid at 108 to 109°C and 130 Pa is collected with a yield of 58%.
1H-NMR (δ, ppm, TMS, CDCl3): 0.87∼0.89(6H, t, C*H*₃), 0.93∼0.97 (12H, d, C*H*₃), 1.78∼1.91 (2H, m, CH₃C*H*), 2.66∼2.70 (2H, m, C*H*CO₂), 4.08∼4.15 (4H, m, CH₃C*H*₂).

### (2) The separation of succinate compounds as shown in Formula (I)

The above prepared succinate compounds as shown in Formula (I) is separated by UOCHI-Sepacore Preparative chromatography, in which the chromatography column is AD-R column (20mm*250mm), the fluid phase is methanol/water with a ratio of 60/40, the fluid rate is 15.8ml/min, and the detected wave is 254nm. The separation and purification are carried out at room temperature.

The collected fractions are (2R, 3R)-2, 3-dipropyl succinic acid ethyl ester and (2S, 3S) -2, 3-dipropyl succinic acid ethyl ester respectively at the retention time of 24 min and 28min.
1H-NMR (δ, ppm, TMS, CDCl₃): 0.87∼0.89(6H, t, C*H*₃), 0.93-0.97 (12H, d, CH₃), 1.79∼1.90 (2H, m, CH₃C*H*), 2.66∼2.68 (2H, m, C*H*CO₂), 4.08∼4.15 (4H, m, CH₃C*H*₂).

The collected fraction is meso-2, 3-dipropyl succinic acid ethyl ester at the retention time of 43min.
1H-NMR (δ, ppm, TMS, CDCl₃): 0.87∼0.89 (6H, t, C*H*₃), 0.93∼0.97 (12H, d, C*H*₃), 1.78∼1.91 (2H, m, CH₃C*H*), 2.66∼2.68 (1H, m, C*H*CO₂), 2.68∼2.70 (1H, m, C*H*CO₂), 4.08∼4.15 (4H, m, CH₃C*H*₂).

The succinate compounds are added in preparing the catalyst component to adjust the amount of each pure isomer obtained according to the above methods, so as to meet the requirement of the following examples. The adding method is a conventional one in chemistry: each isomer (such as levo-, dextro- and meso- 2,3-dipropyl succinic acid ethyl ester) is weighed out according to a certain ratio, and then mixed to prepare the catalyst component; the content of each isomer in the prepared catalyst component is analyzed; if, under analysis, the content of each isomer in the prepared catalyst component cannot meet the requirement, the adding ratio of isomers can be changed as needed, but not changing the total content of the mixture. The analysis of the electron donor content in the catalyst comprises the following steps: carrier destruction by dilute hydrochloric acid, extraction of electron donors by ethyl acetate, and analysis by the conventional method of liquid chromatogram.

### b) The preparation of the solid catalyst component

### Preparation method A for a solid catalyst component

Under nitrogen atmosphere, 4.8g of anhydrous magnesium chloride, 19.5g of isooctyl alcohol, and 19.5g of decane as a solvent are added into a 500ml reactor provided with stirrers. The reaction is carried out for 1.5h until magnesium chloride is dissolved completely at the temperature of 130°C. Then 1.1g of phthalic anhydride is added, and the reaction continues for 1h at the temperature of 130°C to obtain an alcohol adduct, which is then cooled to room temperature.

Under nitrogen atmosphere, the above alcohol adduct is added dropwise into a 120ml solution of titanium tetrachloride which is pre-cooled to -22°C. After the solution is heated to 100°C slowly, 8mmol of succinate compounds are added therein. Then, after the new solution is heated to 110°C and kept for 2h, the mixture is hot filtered. Another 120ml solution of titanium tetrachloride is added, and then the reaction is carried out for 1h after heating the solution to 110°C. After filtration, the solid particulates are washed with anhydrous hexane for 4 times and then dried. Consequently, a solid catalyst component is obtained.

### Preparation method B for a solid catalyst component

Into a reactor in which air is fully replaced by high purity nitrogen, 4.8g of magnesium chloride, 95ml of toluene, 4ml of epichlorohydrin and 12.5ml of tributyl phosphate (TBP) are added in sequence. After the mixture is heated to 50°C under stirring and kept for 2.5h, the solid is dissolved completely. Then 1.4g of phthalic anhydride is added to the mixture, and the temperature is further kept for 1h. After the solution is cooled to below -25°C, 56ml of TiCl₄ is added dropwise within 1h. The temperature is slowly raised to 80°C, during which the solid is precipitated slowly. 5mmol of succinate compounds prepared by the above examples are added respectively, and the temperature is kept for 1h. After filtration, 70ml toluene is added, and then a solid precipitate is obtained after being washed twice.

Then 60ml of toluene and 40ml of TiCl₄ are added. After the mixture is heated to 100°C, it is treated for 2h and the filtrate is exhausted. After the above operation is repeated for one time, another 60ml of toluene is added, and the filter residual is washed for 3 times in a boiling state. Then 60ml of hexane is added, and the filter residual is washed for 2 times in a boiling state. Then another 60ml hexane is added, and the filter residual is washed for 2 times at room temperature to obtain the catalyst component.

### c) Propylene polymerization tests

The catalyst components of the above examples are used to polymerize propylene respectively. The propylene polymerization process is as follows. Into a 5L stainless steel reactor in which air is replaced fully with gas propylene, 5ml of hexane solution comprising 2.5mmol of AlEt₃ and 2ml of hexane solution comprising 0.1mmol of cyclohexyl methyl dimethoxy silane (CHMMS) are added, and then 8 to 10 mg of the above catalyst component and 1.2L of hydrogen are added. After feeding 2.3L of liquid propylene, the temperature is increased to 70°C and kept for 1h. After cooling and pressure release, PP powders are obtained. The polymerization results are listed in Table 1.

**Table 1 Results of propylene polymerization**

| Example | Succinate compound | Preparation method for catalyst | The Fischer projection formula(II) content wt% | Polymerization activity kgPP/gcat | Isotactic index % | Molecular weight distribution Mw/Mn |
|---|---|---|---|---|---|---|
| Example 1 | 2,3-diisopropyl succinic acid ethyl ester | A | 96.5 | 44.5 | 98.8 | 9.5 |
| Comparative Example 1* | 2,3-diisopropyl succinic acid ethyl ester | A | 100 | 45.0 | 98.8 | 9.2 |
| Example 2 | 2,3-dipropyl succinic acid ethyl ester | A | 67.0 | 25.4 | 98.0 | 8.9 |
| Example 3 | 2,3-dipropyl succinic acid ethyl ester | A | 98.2 | 26.9 | 98.3 | 8.6 |
| Comparative Example 2 | 2,3-dipropyl succinic acid ethyl ester | A | 40.8 | 22.0 | 96.4 | 10.2 |
| Example 4 | 2,3-dibutyl succinic acid ethyl ester | A | 76.1 | 32.3 | 98.8 | 9.1 |
| Comparative Example 3 | 2,3-dibutyl succinic acid ethyl ester | A | 30.2 | 22.3 | 96.8 | 10.5 |
| Example 5 | 2,3-dimethyl succinic acid ethyl ester | B | 51.0 | 23.5 | 98.3 | 8.9 |
| Comparative Example 4 | 2,3-dimethyl succinic acid ethyl ester | B | 100 | 25.8 | 98.5 | 8.1 |

| | | | | | | |
|---|---|---|---|---|---|---|
| Note: In comparative examples and examples, besides succinate compounds with the Fischer projection as shown in formula (II), other succinate compounds can be levo isomer, dextro isomer or the mixture thereof. | | | | | | |

It can be seen from Table 1 that, when the catalyst contains a succinate compound with the Fischer projection formula as shown in Formula (II) having a content not less than 51wt% and less than 100wt%, the performance of catalyst would be comparable to that of the catalyst using the pure meso-succinate (i.e. the content of the succinate compound with the Fischer projection formula as shown in Formula (II) is 100wt%), and the molecular weight distribution is wider.

## Claims

1. A catalyst component for olefin polymerization, comprising magnesium, titanium, halogen and electron donor, wherein the electron donor is selected from at least one of the succinate compounds as shown in Formula (I), and in said succinate compounds as shown in Formula (I), the content of the succinate compound with the Fischer projection formula as shown in Formula (II) is greater than or equal to 51.0wt% and less than 100%: 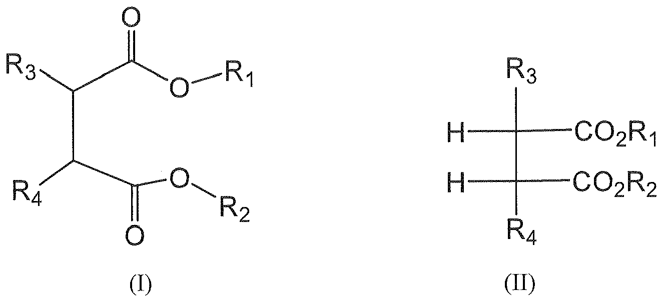 in both Formula (I) and Formula (II), R₁ and R₂, which may be identical to or different from each other, can be (C₁∼C₂₀) straight chain alkyl group, (C₃∼C₂₀) branched chain alkyl or cycloalkyl group, (C₆∼C₂₀) aryl or (C₇∼C₂₀) alkaryl or aralkyl group;
R₃ and R₄, which may be identical to or different from each other, can be halogen atom, (C₁∼C₁₀) straight chain alkyl, (C₃∼C₁₀) branched chain alkyl, (C₃∼C₁₀) cycloalkyl, (C₆∼C₁₀) aryl or (C₇∼C₁₀) alkaryl or an aralkyl group, and R₃ and R₄ can be optionally bonded together to form a ring; and
R₁, R₂, R₃ and R₄ can optionally comprise heteroatoms.

2. A catalyst component according to claim 1, wherein in said succinate compounds as shown in Formula (I), the content of the succinate compound with the Fischer projection formula as shown in Formula (II) is 51.0 to 98.0 wt%.

3. A catalyst component according to claim 1, wherein in said succinate compounds as shown in Formula (I), the content of the succinate compound with the Fischer projection formula as shown in Formula (II) is 67.0 to 98.0 wt%.

4. A catalyst component according to claim 1, wherein in said succinate compounds as shown in Formula (I), the content of the succinate compound with the Fischer projection formula as shown in Formula (II) is 76.0 to 97.0 wt%.

5. A catalyst component according to claim 1, wherein in Formula (I), R₁ and R₂ are selected from methyl, ethyl, propyl, isopropyl, butyl, isobutyl, tertbutyl, pentyl, cyclopentyl, cyclohexyl, phenyl, substituted phenyl, alkylphenyl, halogenated alkylphenyl, indenyl, benzyl and phenylethyl group, and optionally comprise heteroatoms.

6. A catalyst component according to claim 1, wherein in Formula (I), R₃ and R₄ are selected from halogen atom, methyl, ethyl, propyl, isopropyl, butyl, isobutyl, tertbutyl, pentyl, isopentyl, cyclopentyl, cyclohexyl, phenyl, substituted phenyl, alkyl phenyl, halogenated alkyl phenyl, indenyl, benzyl and phenylethyl group, and optionally comprise heteroatoms.

7. A catalyst component according to claim 1, wherein R₁ is the same as R₂.

8. A catalyst component according to claim 1, wherein R₃ is the same as R₄.

9. A catalyst component according to claim 1, wherein the compound with the Fischer projection formula as shown in Formula (II) are selected from the following compounds:
meso-2,3-dimethyl succinic acid methyl ester,
meso-2,3-dimethyl succinic acid ethyl ester,
meso-2,3-dimethyl succinic acid propyl ester,
meso-2,3-dimethyl succinic acid isopropyl ester,
meso-2,3-dimethyl succinic acid butyl ester,
meso-2,3-dimethyl succinic acid isobutyl ester,
meso-2,3-dimethyl succinic acid tertbutyl ester,
meso-2,3-diethyl succinic acid methyl ester,
meso-2,3-diethyl succinic acid ethyl ester,
meso-2,3-diethyl succinic acid propyl ester,
meso-2,3-diethyl succinic acid isopropyl ester,
meso-2,3-diethyl succinic acid butyl ester,
meso-2,3-diethyl succinic acid isobutyl ester,
meso-2,3-diethyl succinic acid tert-butyl ester,
meso-2,3-dipropyl succinic acid methyl ester,
meso-2,3-dipropyl succinic acid ethyl ester,
meso-2,3-dipropyl succinic acid propyl ester,
meso-2,3-dipropyl succinic acid isopropyl ester,
meso-2,3-dipropyl succinic acid butyl ester,
meso-2,3-dipropyl succinic acid isobutyl ester,
meso-2,3-dipropyl succinic acid tert-butyl ester,
meso-2,3-diisopropyl succinic acid methyl ester,
meso-2,3-diisopropyl succinic acid ethyl ester,
meso-2,3-diisopropyl succinic acid propyl ester,
meso-2,3-diisopropyl succinic acid isopropyl ester,
meso-2,3-diisopropyl succinic acid butyl ester,
meso-2,3-diisopropyl succinic acid isobutyl ester,
meso-2,3-diisopropyl succinic acid tert-butyl ester,
meso-2,3-dibutyl succinic acid methyl ester,
meso-2,3-dibutyl succinic acid ethyl ester,
meso-2,3-dibutyl succinic acid propyl ester,
meso-2,3-dibutyl succinic acid isopropyl ester,
meso-2,3-dibutyl succinic acid butyl ester,
meso-2,3-dibutyl succinic acid isobutyl ester,
meso-2,3-dibutyl succinic acid tert-butyl ester,
meso-2,3-diisobutyl succinic acid methyl ester,
meso-2,3-diisobutyl succinic acid ethyl ester,
meso-2,3-diisobutyl succinic acid propyl ester,
meso-2,3-diisobutyl succinic acid isopropyl ester,
meso-2,3-diisobutyl succinic acid butyl ester,
meso-2,3-diisobutyl succinic acid isobutyl ester,
meso-2,3-diisobutyl succinic acid tertbutyl ester,
meso-2,3-dibenzyl succinic acid methyl ester,
meso-2,3-dibenzyl succinic acid ethyl ester,
meso-2,3-dibenzyl succinic acid propyl ester,
meso-2,3-dibenzyl succinic acid isopropyl ester,
meso-2,3-dibenzyl succinic acid butyl ester,
meso-2,3-dibenzyl succinic acid isobutyl ester,
meso-2,3-dibenzyl succinic acid tert-butyl ester,
meso-2,3-dicyclohexyl succinic acid methyl ester,
meso-2,3-dicyclohexyl succinic acid ethyl ester,
meso-2,3-dicyclohexyl succinic acid propyl ester,
meso-2,3-dicyclohexyl succinic acid isopropyl ester,
meso-2,3-dicyclohexyl succinic acid butyl ester,
meso-2,3-dicyclohexyl succinic acid isobutyl ester,
meso-2,3-dicyclohexyl succinic acid tertbutyl ester,
meso-2,3-dicyclohexyl succinic acid pentyl ester,
meso-2,3-dicyclohexyl succinic acid isopentyl ester,
meso-2,3-dicyclohexyl methyl succinic acid methyl ester,
meso-2,3-dicyclohexyl methyl succinic acid ethyl ester,
meso-2,3-dicyclohexyl methyl succinic acid propyl ester,
meso-2,3-dicyclohexyl methyl succinic acid isopropyl ester,
meso-2,3-dicyclohexyl methyl succinic acid butyl ester,
meso-2,3-dicyclohexyl methyl succinic acid isobutyl ester,
meso-2,3-dicyclohexyl methyl succinic acid tertbutyl ester,
(2R, 3S)-2-methyl-3-benzyl succinic acid methyl ester,
(2R, 3S)-2-methyl-3-benzyl succinic acid ethyl ester,
(2R, 3S)-2-methyl-3-benzyl succinic acid propyl ester,
(2R, 3S)-2-methyl-3-benzyl succinic acid isopropyl ester,
(2R, 3S)-2-methyl-3-benzyl succinic acid butyl ester,
(2R, 3S)-2-methyl-3-benzyl succinic acid isobutyl ester,
(2R, 3S)-2-methyl-3-benzyl succinic acid tert-butyl ester,
(2R, 3S)-2-methyl-3-benzyl succinic acid pentyl ester,
(2R, 3S)-2-methyl-3-benzyl succinic acid isopentyl ester,
(2S, 3R)-2-methyl-3-benzyl succinic acid methyl ester,
(2S, 3R)-2-methyl-3-benzyl succinic acid ethyl ester,
(2S, 3R)-2-methyl-3-benzyl succinic acid propyl ester,
(2S, 3R)-2-methyl-3-benzyl succinic acid isopropyl ester,
(2S, 3R)-2-methyl-3-benzyl succinic acid butyl ester,
(2S, 3R)-2-methyl-3-benzyl succinic acid isobutyl ester,
(2S, 3R)-2-methyl-3-benzyl succinic acid tert-butyl ester,
(2S, 3R)-2-methyl-3-benzyl succinic acid pentyl ester,
(2S, 3R)-2-methyl-3-benzyl succinic acid isopentyl ester,
(2R, 3S)-2-methyl-3-cyclohexyl methyl succinic acid methyl ester,
(2R, 3S)-2-methyl-3-cyclohexyl methyl succinic acid ethyl ester,
(2R, 3S)-2-methyl-3-cyclohexyl methyl succinic acid propyl ester,
(2R, 3S)-2-methyl-3-cyclohexyl methyl succinic acid isopropyl ester,
(2R, 3S)-2-methyl-3-cyclohexyl methyl succinic acid butyl ester,
(2R, 3S)-2-methyl-3-cyclohexyl methyl succinic acid isobutyl ester,
(2R, 3S)-2-methyl-3-cyclohexyl methyl succinic acid tertbutyl ester,
(2R, 3S)-2-methyl-3-cyclohexyl methyl succinic acid pentyl ester,
(2R, 3S)-2-methyl-3-cyclohexyl methyl succinic acid isopentyl ester,
(2S, 3R)-2-methyl-3-cyclohexyl methyl succinic acid methyl ester,
(2S, 3R)-2-methyl-3-cyclohexyl methyl succinic acid ethyl ester,
(2S, 3R)-2-methyl-3-cyclohexyl methyl succinic acid propyl ester,
(2S, 3R)-2-methyl-3-cyclohexyl methyl succinic acid isopropyl ester,
(2S, 3R)-2-methyl-3-cyclohexyl methyl succinic acid butyl ester,
(2S, 3R)-2-methyl-3-cyclohexyl methyl succinic acid isobutyl ester,
(2S, 3R)-2-methyl-3-cyclohexyl methyl succinic acid tert-butyl ester,
(2S, 3R)-2-methyl-3-cyclohexyl methyl succinic acid pentyl ester,
(2S, 3R)-2-methyl-3-cyclohexyl methyl succinic acid isopentyl ester.

10. A catalyst component according to claim 1, wherein said electron donor succinate compound is marked as "a", and the catalyst component further contains electron donor "b", wherein "b" is aromatic esters compound or diether compound as shown in Formula (III), and the molar ratio of "a" to "b" is from 1:0.01 to 1:100: 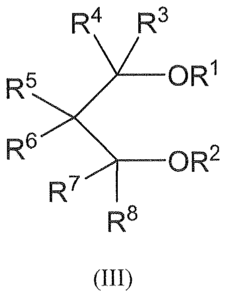 in Formula (III), R¹ and R², which may be identical to or different from each other, can be selected from straight chain or branched chain (C₁-C₂₀) alkyl and (C₃-C₂₀) cycloalkyl group; R³-R⁸, which may be identical to or different from each other, can be selected from hydrogen atoms, halogen atoms, straight chain or branched chain (C₁-C₂₀) alkyl, (C₃-C₂₀) cycloalkyl, (C₆-C₂₀) aryl or (C₇∼C₂₀) aralkyl, and the R³-R⁸ groups can be optionally bonded together to form a ring.

11. A catalyst component according to claim 10, wherein the molar ratio of "a" to "b" is from 1:0.02 to 1:5.

12. A catalyst component according to any one of claims 1 to 11, obtained by the reaction of a magnesium compound, a titanium compound and said succinate compound, wherein
the titanium compound is as shown in the Formula of TiXₙ(OR)₄₋ₙ, in which R is hydrocarbyl group having 1 to 20 carbon atoms, X is halogen, and n=0-4;
and the magnesium compound is selected from magnesium dihalide, alkoxymagnesium, alkyl magnesium, hydrate or alcohol adduct of magnesium dihalide, and one of the derivatives formed by replacing a halogen atom of the magnesium dihalide molecular formula with an alkoxyl or haloalkoxyl group or their mixture.

13. A catalyst component according to claim 12, wherein the magnesium compound used is dissolved in a solvent system containing an organic alcohol compound, which is a monohydric alcohol with 2 to 8 carbon atoms.

14. A catalyst component according to claim 12, wherein the magnesium compound is dissolved in a solvent system containing an organic epoxy compound and an organic phosphorus compound, in which the organic epoxy compound comprises at least one of an aliphatic olefin, dienes, a halogenated aliphatic olefin, oxides of dienes, glycidyl ethers and inner ethers, all of which have 2 to 8 carbon atoms, and the organic phosphorus compound is hydrocarbyl ester or halogenated hydrocarbyl ester of orthophosphoric acid or phosphorous acid.

15. A catalyst for olefin polymerization, comprising the following components:
1) said catalyst component according to any one of claims 1 to 14,
2) an alkyl aluminium compound,
3) optionally, an external electron donor component.

16. A catalyst according to claim 15, wherein the external electron donor compound is as shown in Formula RₙSi(OR')₄₋ₙ, wherein 0≤n≤3, R and R', which may be identical to or different from each other, can be selected from alkyl, cycloalkyl, aryl, halogenated alkyl and amine group, and R can be also halogen or hydrogen atom.

17. A prepolymerization catalyst for olefin polymerization, comprising a solid catalyst according to claim 16 and the prepolymer obtained by the prepolymerization of said solid catalyst and olefin, the prepolymerization multiply being in the range of 0.1 to 1000g of olefin polymers per g of solid catalyst components.

18. A prepolymerization catalyst according to claim 17, wherein the olefin to be prepolymerized is ethylene or propylene.

19. A process for olefin polymerization carried out at the presence of said catalyst component according to any one of claims 1 to 14, said catalyst according to claim 15 or 16, or the prepolymerization catalyst according to claim 17 or 18.
